# EUROPÄISCHE PATENTSCHRIFT

(11) **EP 0 822 045 B1**
(45) Veröffentlichungstag und Bekanntmachung des Hinweises auf die Patenterteilung: **14.11.2001**
(21) Anmeldenummer: 97112223.9
(22) Anmeldetag: 17.07.1997
(51) Int. Cl.: B28C 5/08, B28C 5/02, B01F 13/08

(54) **Betonmischanlage**
Concrete mixing arrangement
Arrangement pour mélanger du béton

(30) Priorität: 03.08.1996 DE 19631518
(43) Veröffentlichungstag der Anmeldung: 04.02.1998
(73) Patentinhaber: Miller, Petra, 86536 Neusäss (DE)
(72) Erfinder: Dillitzer, Jürgen, 86637 Wertingen (DE); Zöbelein, Leonhard, Dipl.-Ing, 86911 Diessen (DE)
(74) Vertreter: Charrier, Rolf, Dipl.-Ing.

(56) Entgegenhaltungen:
- EP-A- 0 805 129
- US-A- 4 935 133

## Beschreibung

Die Erfindung betrifft eine Betonmischanlage nach dem Oberbegriff des Anspruches 1.

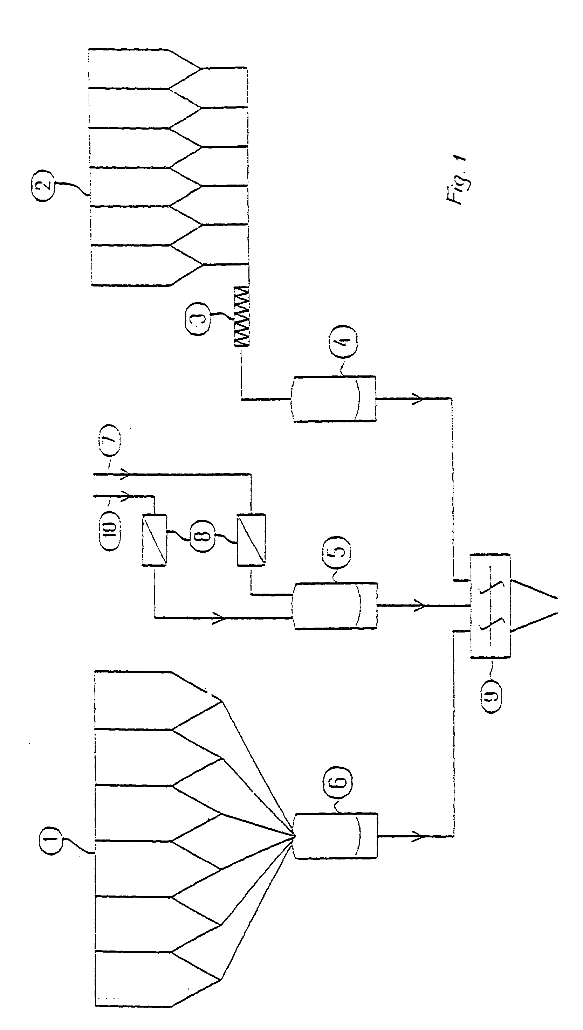

Eine solche Betonmischanlage ist schematisch in Figur 1 dargestellt. Sie besteht aus den Zuschlagssilos 1 und den Bindemittelsilos 2, die zu einem Mischer 9 führen, wobei jeweils eine Waage 4, 6 und bei den Bindemittelsilos 2 eine Fördereinrichtung 3 zwischengeschaltet sind. Zum Mischer 9 führt weiterhin eine Zuleitung 7 für Frischwasser und eine Zuleitung 10 für Recyclingwasser, wobei eine Wasserwaage 5 zwischengeschaltet ist.

Es hat sich gezeigt, daß die Betonqualität verbessert werden kann, wenn in die Zuleitungen 7, 10 Rohrstrecken 8 zwischengeschaltet werden, die auf das Wasser wirkende Magnetfelder abwechselnder Polarität erzeugen.

Betonmischanlager gemäß dem Oberbegriff des Anspruchs 1 sind bekannt aus US-A-4,935,133 und EP-A-805 129.

Nach der US-A-4,935,133 weist die Rohrstrecke mehrere im Abstand zueinander angeordnete Ringmagnete auf, bei die einander zugewandten Flächen der Ringmagnete entgegensetzte Polarität aufweisen. Das Wasser strömt jeweils radial zwischen zwei benachbarte Ringmagnete hindurch.

Bei der in der EP-A-805 129 beschriebenen Rohrstrecke sind Permanentmagnete vorgesehen, die die Durchflußstrecke umgeben und durch magnetisch leitende Abstandshalter zueinander im Abstand gehalten werden. Die Permanentmagnete weisen eine abwechselnde Polarität auf.

Es besteht die Aufgabe, die Rohrstrecke so auszubilden, daß sich eine Verbesserung der Verarbeitbarkeit und eine Verlängerung der Verarbeitungszeit ergibt. Diese Aufgabe wird durch die Betonmischanlage gemäß dem Anspruch 1 gelöst.

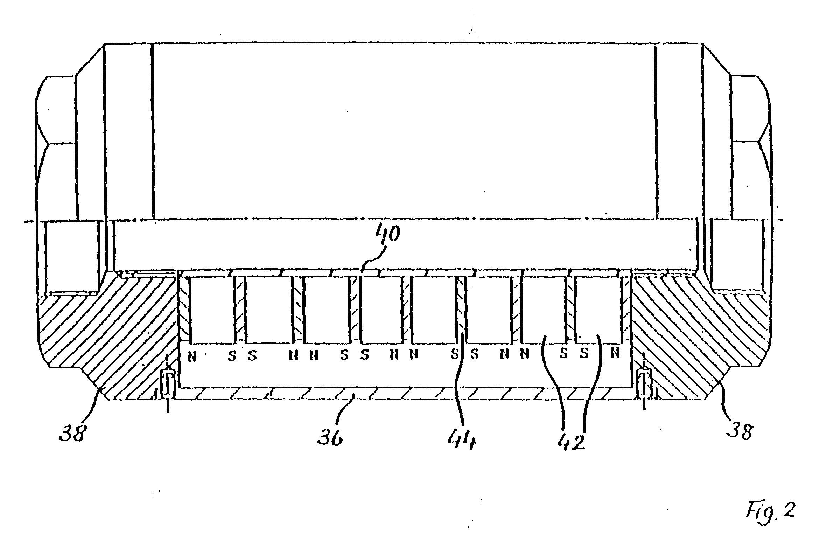

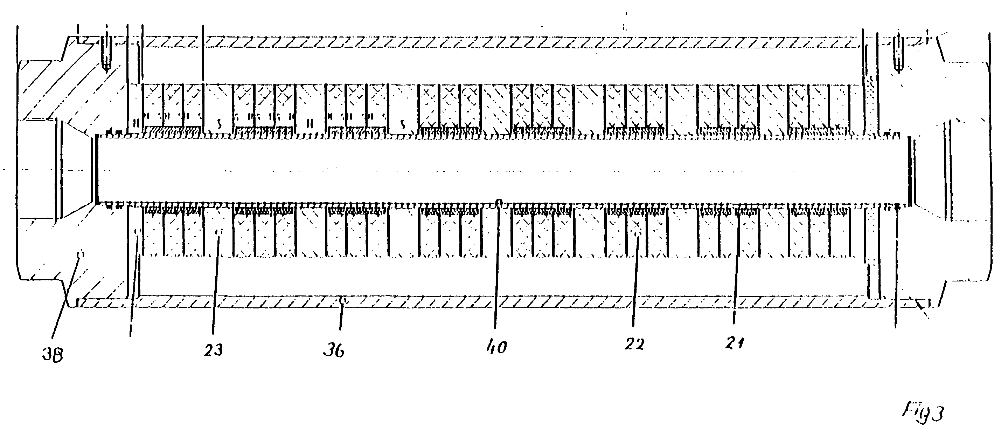

Zwei Ausführungsbeispiele der erfindungsgemäßen Rohrstrecken werden anhand der Figuren 2 und 3 näher erläutert.

Die Rohrstrecke nach Figur 2 weist endseitig zwei Anschlußköpfe 38 auf, an welche die Rohrleitungen 7 bzw. 10 angeschlossen werden. Außenseitig sind die beiden Anschlußköpfe 38 über ein zylindrisches Eisengehäuse 36 miteinander verbunden. Innenseitig erfolgt die Verbindung über ein Edelstahlrohr 40. Auf diesem Edelstahlrohr 40 sind axial magnetisierte Ringmagnete 42 angeordnet, wobei zwischen benachbarten Ringmagneten 42 jeweils ein Distanzring 44 eingefügt ist. Die einander benachbarten Flächen benachbarter Ringmagnete 42 weisen gleiche Polarität auf, wodurch Magnetfelder abwechselnder Polarität vorhanden sind, welche auf das Wasser wirken, das das Innenrohr 40 durchströmt. Das zylindrische Gehäuse 36 ist im Abstand zum Außenumfang der Ringmagnete 42 angeordnet.

Bei der Anordnung nach Figur 3 sind jeweils drei Ringmagnete 22 zwischen zwei aus Weicheisen bestehenden Distanzringen 23 angeordnet. Die an einem Distanzring anliegenden Flächen der Ringmagnete 22 haben gleiche Polarität, womit die Distanzringe 23 abwechselnde Polarität aufweisen. Der Innendurchmesser der Ringmagnete 22 ist geringfügig größer als der Innendurchmesser des aus Edelstahl bestehenden Innenrohrs 40. Jeweils drei Permanentmagnete 22 sind auf einer Distanzhülse 21 angeordnet.

Bei den Ringmagneten handelt es sich bevorzugt um kunststoffgebundene anisotrope Hartferritmagnete mit einer Remanenz von mindestens 0,41 T.

Versuche haben gezeigt, daß sich die Verarbeitbarkeit des Betons verbessert und sich die Verarbeitungszeit verlängert, wenn das Wasser zuvor eine Rohrstrecke 8 durchströmt hat, im Vergleich zur Verwendung von Wasser, das direkt dem Mischer zugeführt wird.

Ein Maß für die Verarbeitbarkeit ist das Ausbreitmaß nach DIN 1048 - je größer das Ausbreitmaß, desto besser ist die Verarbeitbarkeit - die Grenze für das Ausbreitmaß liegt systemimmanent bei 700 mm. Nachfolgend wird das Ausbreitverhalten angegeben, wobei die Klammerangaben unbehandeltes Wasser betreffen: nach 10 Minuten 580 mm (520 mm), nach 45 Minuten 550 mm (490 mm), nach 60 Minuten 540 mm (470 mm).

Die Prüfung der Festigkeit nach DIN 1048 ergab eine Verbesserung der Festigkeit, bei Prüflingen im Alter von 10 Tagen, um 8 %.

## Patentansprüche

1. Betonmischanlage, bei welcher in einem Mischer (9) Zuschlagstoffe und Bindemittel mit Wasser, das zuvor magnetisch behandelt wurde, vermischt werden, wobei in dem Wasserzulauf (7, 10) eine Rohrstrecke (8) zwischengeschaltet ist, die auf das Wasser wirkende Magnetfelder abwechselnder Polarität erzeugt, **dadurch gekennzeichnet, daß** auf der Rohrstrecke (8) axial magnetisierte Ringmagnete (22, 42) und Distanzringe (23, 44) angeordnet sind, wobei die an einem Distanzring (23, 44) anliegenden Flächen der Ringmagnete (22, 42) gleiche Polarität haben.

2. Betonmischanlage nach Anspruch 1, **dadurch gekennzeichnet, daß** bei mehreren zwischen den Distanzringen (23) angeordneten Ringmagneten (22) bei benachbarten Ringmagneten (22) die einander benachbarten Flächen entgegengesetzte Polarität aufweisen und die an einem Distanzring (23) anliegenden Flächen der Ringmagnete (22) gleiche Polarität aufweisen.

3. Betonmischanlage nach Anspruch 2, **dadurch gekennzeichnet, daß** die Anzahl der zwischen zwei Distanzringen (23) angeordneten Ringmagnete (22) ungeradzahlig ist.

4. Betonmischanlage nach einem der Ansprüche 1 bis 3, **dadurch gekennzeichnet, daß** die Ringmagnete (22, 42) ein Stahlrohr (40) umgeben.

5. Betonmischanlage nach einem der Ansprüche 1 bis 4, **dadurch gekennzeichnet, daß** die Ringmagnete (22, 42) von einem Eisengehäuse (36) umgeben sind, das im Abstand zum Außendurchmesser der Ringmagnete (22, 42) verläuft.

6. Betonmischanlage nach einem der Ansprüche 1 bis 5, **dadurch gekennzeichnet, daß** zwei Rohrstrecken (8) für Rein- und Recyclingwasser vor einer Wasserwaage (5) zwischengeschaltet sind.

## Claims

1. Concrete mixing installation in which additives and binding agents are mixed with water which has previously been treated magnetically, in a mixer (9), whereby a pipe section (8) which produces magnetic fields of alternating polarity acting on the water, is interposed in the water supply (7, 10), **characterised in that** axially magnetised ring magnets (22, 42) and spacer rings (23, 44) are arranged on the pipe section (8), with the surfaces of the ring magnets (22, 42) bearing on a spacer ring (23, 44) having the same polarity.

2. Concrete mixing installation according to claim 1, **characterised in that** with a plurality of ring magnets (22) arranged between the spacer rings (23) with neighbouring ring magnets (22) the neighbouring surfaces exhibit opposite polarity and the surfaces of the ring magnets (22) bearing on a spacer ring (23) exhibit the same polarity.

3. Concrete mixing installation according to claim 2, **characterised in that** the number of ring magnets (22) arranged between two spacer rings (23) is an odd number.

4. Concrete mixing installation according to one of claims 1 to 3, **characterised in that** the ring magnets (22, 42) surround a steel pipe (40).

5. Concrete mixing installation according to one of claims 1 to 4, **characterised in that** the ring magnets (22, 42) are surrounded by an iron housing (36) which runs a distance from the outside diameter of the ring magnets (22, 42).

6. Concrete mixing installation according to one of claims 1 to 5, **characterised in that** two pipe sections (8) for clean and recycled water are interposed in front of a water weighing machine (5).

## Revendications

1. Installation destinée à mélanger du béton, dans laquelle des agrégats ainsi qu'un liant sont mélangés avec de l'eau qui a été préalablement traitée de manière magnétique dans un mélangeur (9), moyennant quoi une section de tuyau (8) est intercalée dans l'admission d'eau (7, 10), laquelle section produit des champs magnétiques de polarité variable agissant sur l'eau, **caractérisée en ce que** des aimants toriques (22, 42) axialement magnétisés et des entretoises (23, 44) sont agencés sur la section de tuyau (8), où les surfaces des aimants toriques (22, 42) adjacents à une entretoise (23, 44) présentent la même polarité.

2. Installation destinée à mélanger du béton selon la revendication 1, **caractérisée en ce que**, au niveau de plusieurs aimants toriques (22) disposés entre les entretoises (23), au niveau d'aimants toriques (22) adjacents, les surfaces contiguës les unes aux autres présentent une polarité contraire et les surfaces des aimants toriques (22) adjacentes à une entretoise (23) présentent la même polarité.

3. Installation destinée à mélanger du béton selon la revendication 2, **caractérisée en ce que** le nombre d'aimants toriques (22) disposés entre deux entretoises (23) est impair.

4. Installation destinée à mélanger du béton selon l'une quelconque des revendications 1 à 3, **caractérisée en ce que** les aimants toriques (22, 42) entourent un tube d'acier (40).

5. Installation destinée à mélanger du béton selon l'une quelconque des revendications 1 à 4, **caractérisée en ce que** les aimants toriques (22, 42) sont entourés par un boîtier en fer (36), qui s'étend à distance du diamètre extérieur des aimants toriques (22, 42).

6. Installation destinée à mélanger du béton selon l'une quelconque des revendications 1 à 5, **caractérisée en ce que** deux sections de tuyau (8) sont intercalées avant un niveau à bulle d'air (5) pour le passage d'eau pure et d'eau de recyclage.
